## Europäisches Patentamt
## European Patent Office
## Office européen des brevets

(11) Veröffentlichungsnummer: **0 031 045**
**B1**

(12)
# EUROPÄISCHE PATENTSCHRIFT

(45) Veröffentlichungstag der Patentschrift:
**14.03.84**

(51) Int. Cl.³: **C 06 B 43/00**, C 06 B 33/00

(21) Anmeldenummer: **80107403.0**

(22) Anmeldetag: **27.11.80**

(54) **Verwendung von Zinkperoxid als Oxidationsmittel für Sprengstoffe und pyrotechnische Gemische.**

(30) Priorität: **22.12.79 DE 2952069**

(43) Veröffentlichungstag der Anmeldung:
**01.07.81 Patentblatt 81/26**

(45) Bekanntmachung des Hinweises auf die Patenterteilung:
**14.03.84 Patentblatt 84/11**

(84) Benannte Vertragsstaaten:
**AT BE CH DE FR GB IT LI LU NL SE**

(56) Entgegenhaltungen:
**DE - C - 171 372**
**FR - A - 550 697**
**US - A - 2 709 129**
**US - A - 3 602 283**

**H. ELLERN: "Modern Pyrotechnics", 1961, Seiten 185-194 Chemical Publishing Co. New York, U.S.A.**

(73) Patentinhaber: **DYNAMIT NOBEL AKTIENGESELLSCHAFT, Patentabteilung Postfach 1209, D-5210 Troisdorf, Bez. Köln (DE)**

(72) Erfinder: **Hagel, Rainer, Dr., Wendenstrasse 9, D-8620 Lichtenfels (DE)**
Erfinder: **Redecker, Klaus, Dr., Burgfarrnbacherstrasse 34, D-8500 Nürnberg (DE)**

**0 031 045**

## Verwendung von Zinkperoxid als Oxidationsmittel für Sprengstoffe und pyrotechnische Gemische

Gegenstand der vorliegenden Erfindung ist die Verwendung von Zinkperoxid als Oxidationsmittel und Sauerstofflieferant in Gemischen, die Explosivstoffe enthalten. Solche Gemische sind z. B. Sprengstoffe oder pyrotechnische Gemische.

Die Herstellung anorganischer Peroxide ist an sich bekannt. Von diesen bekannten anorganischen Peroxiden ist bisher als Oxidationsmittel für Sprengstoffe oder in Pyrotechnica nur das Barium- und Strontiumperoxid eingesetzt worden. So wird Bariumperoxid zur Herstellung von Wasserstoffperoxid und in Zündkirschen (mit Mg-Pulver) sowie in der Aluminothermie oder auch, wie Strontiumperoxid, in der Pyrotechnik verwendet. Die Herstellung von Zinkperoxid erfolgt im allgemeinen anders als diejenige des Bariumperoxids, durch Einwirkung von $H_2O_2$ auf Zinkhydroxid. Es ist im Handel in einer »kosmetischen« und einer »medizinischen« Qualität erhältlich. Es findet Verwendung in Medizin und Kosmetik, ferner als Konservierungsmittel. Von einem Einsatz als Oxidationsmittel für Sprengstoffe bzw. in Pyrotechnica ist nichts bekannt.

Der Nachteil der bisher als Oxidationsmittel für Sprengstoffe und Pyrotechnica verwendeten Peroxide des Bariums und Strontiums besteht zum einen in den nach der Umsetzung erhaltenen basischen Reaktionsprodukten und deren nachteiligem Einfluß auf die Korrosionsbeständigkeit der verwendeten metallischen Werkstoffe. Weiterhin sind sie sehr anfällig gegenüber Luftfeuchtigkeit, wobei Hydrolysate mit geringerem Anteil an verfügbarem Sauerstoff entstehen. Das Bariumperoxid hat weiterhin noch den großen Nachteil, daß bei seiner Verbrennung gesundheitsschädigende Bariumverbindungen entstehen.

Es bestand daher die Aufgabe, ein Oxidationsmittel für Explosivstoffe, besonders für Sprengstoffe und Pyrotechnica zu finden, das die beschriebenen Nachteile beseitigt.

In Erfüllung dieser Aufgabe wurde nun gefunden, daß Zinkperoxid ein geeignetes Oxidationsmittel für Sprengstoffe und pyrotechnische Gemische darstellt. Mit den zinkhaltigen Umsetzungsprodukten läßt sich die Korrosion metallischer Werkstoffe in feuchter Atmosphäre drastisch mindern, und die MAK-Werte von Zink- im Vergleich zu denjenigen der Bariumverbindungen belegen die um den Faktor 10 verringerte Gesundheitsgefährdung.

Als Explosivstoffe, die als Komponenten zur Umsetzung mit Zinkperoxid eingesetzt werden können, eignen sich Primär- und Sekundärsprengstoffe sowie pyrotechnische Gemische.

Unter Primär- oder Initialsprengstoffen werden dabei solche Sprengstoffe verstanden, die zur kurzzeitigen Anzündung anderer Sprengstoffe eingesetzt werden. Hierzu gehören Salze des Trinitroresorcins oder des Trinitrophenols, insbesondere deren Blei- und Bariumverbindungen, weiterhin Metallsalze von Mono- und Dinitrodihydroxidiazobenzole, Salze der Stickstoffwasserstoffsäure, wie z. B. Bleiazide; außerdem aber auch metallfreie Verbindungen wie z. B. Diazodinitrophenol, Nitroformphenyldiazonium, Tetrazen oder Stickstofftetrasulfid. Die Initialsprengstoffe können in den daraus hergestellten Zünd- und Anzündsätzen jeweils als alleinige Komponente oder auch im Gemisch miteinander vorliegen.

Gemische aus solchen Initialsprengstoffen, Oxidationsmitteln und Friktionsmitteln liegen im allgemeinen in Zünd- und Anzündsätzen vor. Gegebenenfalls enthalten diese Sätze auch noch ein Reduktionsmittel.

Zur Fertigung von Zünd- und Anzündsätzen werden den Initialsprengstoffen oder ihrem Gemisch Friktionsmittel wie Glas, Antimonsulfid oder Calciumsilizid zugemischt, deren Aufgabe zum Teil in einer Erhöhung der mechanischen Empfindlichkeit, zum Teil in einer Verbesserung des Anzündvermögens besteht. Erfindungsgemäß wird als Oxidationsmittel in solchen Gemischen anstelle der bisher verwendeten Bariumverbindungen Zinkperoxid alleine oder im Gemisch mit anderen Oxidationsmitteln eingesetzt. Dabei treten die o. g. Nachteile der Bariumverbindungen, z. B. von Bariumnitrat, nicht mehr auf.

Als Reduktionsmittel in den Zünd- und Anzündsätzen diesen Metalle, Legierungen oder intermetallische Verbindungen, wie z. B. Calciumsilizid. Die einsetzbaren Metalle bzw. Legierungen und Verbindungen sind an sich bekannt. Darüber hinaus können die Zünd- und Anzündsätze weitere, an sich bekannte, Zusätze, insbesondere Sekundärsprengstoffe, enthalten. Als Beispiele für solche Sekundärsprengstoffe seien Nitrocellulose oder Pentaerythrittetranitrat (PETN) genannt.

Die Menge des verwendeten Zinkperoxids in den Zünd- und Anzündsätzen richtet sich nach Art und Menge der Begleitstoffe. Anzündsätze mit einem Anteil von 10 bis 30 Gew.-% Initialsprengstoffe, 0 bis 10 Gew.-% eines Reduktionsmittels benötigen im allgemeinen 50 bis 60 Gew.-% Zinkperoxid.

Die Herstellung der erfindungsgemäßen zinkperoxidhaltigen Anzündsätze erfolgt nach an sich bekannten Verfahren durch Sieben der trockenen oder Kneten der wasserfeuchten Mischung. Die Dosierung der feuchten Masse kann dabei durch Einstreichen in Lochplatten oder durch Strangpressen erfolgen.

Zinkperoxid eignet sich jedoch als Oxidationsmittel in Explosivstoffgemischen nicht nur im Gemisch mit Initialsprengstoffen in Anzünd- und Zündsätzen, sondern auch im Gemisch mit Sekundärsprengstoffen oder in pyrotechnischen Gemischen. Als Beispiele für Sekundärsprengstoffe wurden bereits Nitrocellulose und Pentaerythrittetranitrat (PETN) genannt. Als weiteres Beispiel seien Mischungen

2

mit Oktogen genannt, sowie Gemische mit solchen Sekundärsprengstoffen, die eine große negative Sauerstoffbilanz aufweisen. Hierzu zählen beispielhaft Aminoverbindungen von nitrierten Aromaten, z. B. des Trinitrobenzols, wie Mono-, Di- oder Triaminotrinitrobenzol oder Diaminohexanitrodiphenyl, weiterhin die Acylierungsprodukte dieser Verbindungen, wie z. B. Hexanitrooxanilid oder Hexanitrodiphenylharnstoff. Ferner zählen beispielhaft zu diesen Sekundärsprengstoffen Hexanitrostilben, Hexanitrodiphenyloxid, Hexanitrodiphenylsulfid, Hexanitrodiphenylsulfon und Hexanitrodiphenylamin sowie Tetranitrocarbazol, Tetranitroacridon oder Polyvinylnitrat.

Beim Einsatz des Zinkperoxids in pyrotechnischen Gemischen enthält ein solches Gemisch gegebenenfalls noch weitere Oxidationsmittel sowie Reduktionsmittel. Als Reduktionsmittel können Metalle oder Metall-Legierungen eingesetzt werden. So reagieren Mischungen von Zinkperoxid z. B. mit Titan, Zirkon, Magnesium oder Cermagnesium äußerst heftig zum Teil unter Verpuffung. Der Anteil an Zinkperoxid liegt in diesen Gemischen zweckmäßigerweise zwischen 40 und 60 Gew.-%, bevorzugt zwischen 45 und 55 Gew.-%, bezogen auf das Gesamtgewicht. Es können jedoch auch andere, weniger heftig reagierende Metalle oder deren Verbindungen, wie z. B. Eisen-, Nickel- oder Tantalpulver bzw. Calcium- oder Cer-Silicium-Verbindungen zum Einsatz kommen. Diese Metalle oder Metallverbindungen können auch im Gemisch mit den o. g. Metallen eingesetzt werden. Teilweise verläuft beim Einsatz dieser Metalle die Umsetzung unter Rotglut.

Außer Metallen und/oder Metallverbindungen können die pyrotechnischen Gemische auch organische Reduktionsmittel enthalten, wie z. B. Polyoxymethylen, Lactose oder Polyäthylen. In diesen Fällen erhält man z. B. bei einem Gewichtsverhältnis Zinkperoxid/Reduktionsmittel von 85/15 eine lebhafte Umsetzung. Beim Einsatz von organischen Reduktionsmitteln kann demzufolge der Gehalt des Zinkperoxid in den pyrotechnischen Gemischen bis zu 90 Gew.-% betragen.

Darüber hinaus eignen sich als pyrotechnische Mischungen auch solche, die als Reduktionsmittel sowohl Metalle in reiner Form oder als Legierungs- oder Verbindungsbestandteil und weitere Reduktionsmittel enthalten. Eine bevorzugte Ausführung enthält dabei Reduktionsmittel, die zugleich als Bindemittel dienen können.

Diese Bindemittel umfassen thermoplastische Polymere. Dazu zählen z. B. solche Polymere, die durch Umsetzung von Polyvinylalkohol mit Aldehyden mit einer Kohlenstoffzahl von 1 bis 6, insbesondere Butyraldehyd, erhalten werden. Diese Polymeren werden auch als Polyvinylacetale bezeichnet. Ferner eignen sich auch solche Stoffe als Bindemittel, die als bifunktionelle Verbindungen eingesetzt werden, und die nach dem Mischen mit den pyrotechnischen Komponenten eine z. B. radikalisch ausgelöste Vernetzung oder eine Kondensation erleiden. Hierzu zählen beispielhaft auch Methyl-(meth)-acrylate, Polybutadiene und deren Derivate, Polyurethane oder Acrylnitrile.

Verständlicherweise sind besonders die Bindemittel interessant, die selbst einen Energie- und Sauerstoffbeitrag zur Umsetzung beisteuern können. Solche Bindemittel sind beispielsweise Cellulosenitrate, Polyvinylnitrate oder Polynitropolyphenylen.

In den nachfolgenden Beispielen wird die Erfindung näher erläutert.


Beispiel 1

Herstellung von Zinkperoxid

In einem 6-l-Dreihalskolben, versehen mit Rührer, Kontaktthermometer, Rückflußkühler und Tropftrichter werden 1438 g (5 Mol) $ZnSO_4 \cdot 7 H_2O$ in 750 ml Wasser unter Erwärmen zur Lösung gebracht und hierzu schnell 1,5 l einer konzentrierten Lösung von Ammoniak in Wasser gegeben. Dabei löst sich ausgefallenes $Zn(OH)_2$ wieder auf. Bei einer Temperatur von 80° C werden 1,5 l 30%iges $H_2O_2$ in Portionen von jeweils 100 ml so schnell zugegeben, daß die Schaumbildung unter Kontrolle bleibt. Die Temperatur kann auch bis zum kräftigen Rückfluß der Lösung auf 95 bis 100° C gehalten werden. Dieser Vorgang dauert ca. 1 Stunde. Nach beendeter $H_2O_2$-Zugabe wird noch 10 Minuten nachgerührt, danach heiß abgesaugt und mit Wasser gewaschen, bis das Filtrat sulfatfrei ist. Der Rückstand wird bei Raumtemperatur getrocknet. Die nachfolgende Tabelle gibt die Ausbeute und einige Eigenschaften des erhaltenen Zinkperoxids in Abhängigkeit von der Reaktionstemperatur wieder:

3

| Reaktionstemp. (°C) | Ausbeute (ca. g) | O-Anteil (%) | Schüttdichte (g/cm³) | Farbe |
|---|---|---|---|---|
| 80 | 300 | 13,0 | 0,88 | hellgelb |
| 85 | 350 | 13,4 | 1,30 | hellgelb |
| 90 | 350 | 12,8 | 1,40 | hellgelb |
| Rückfluß | 400 | 12,5 | 1,70 | gelblich |

Erhöht man bei 85 und 90°C die Menge des eingesetzten $H_2O_2$ von 1,5 auf 2,0 l, so erhöht sich die Ausbeute an Zinkperoxid auf 400 g bei einer Schüttdichte von 1,45 g/cm³. Das bei dieser Reaktionstemperatur erhaltene Produkt besitzt eine rieselfähige, kristalline Struktur. Die Zugabe von $H_2O_2$ muß rasch erfolgen. Langsames Zutropfen verschlechtert die Ausbeute. Die Korngröße liegt im allgemeinen unter 0,1 mm, die Zersetzungstemperatur bei 200°C.

Anstelle des in diesem Beispiel genannten Zinksulfats können auch andere, wasserlösliche Zinksalze, wie z. B. Zinkchlorid oder Zinkacetat als Ausgangsmaterial genommen werden.

Die Ermittlung des Sauerstoffanteils (O-Anteil) erfolgte durch Zugabe von 1 g KJ zu 100 mg Zinkperoxid in 20 ml $H_2O$. Nach dem Ansäuern mit ca. 5 ml halbkonzentrierter $H_2SO_4$ wurde mit Wasser auf 100 ml in Meßkölbchen aufgefüllt und mit 0,1-n-Natriumthiosulfat-Lösung titriert. Der Aktivsauerstoff-Anteil ergibt sich nach der Formel

$$\text{O-Anteil (\%)} = \frac{80 \cdot \text{Verbrauch (ml)}}{\text{Einwaage (mg)}}.$$

In der Literatur wird die Formel für Zinkperoxid mit $3\,ZnO_2 \cdot Zn(OH)_2$, entsprechend einem verfügbaren O-Anteil von 12,3%, angegeben. Das erfindungsgemäß bevorzugt verwendete Zinkperoxid besitzt demnach einen erhöhten Aktivsauerstoff-Anteil von über 12,3%.

Beispiel 2

Verwendung von Zinkperoxid in Anzündsätzen

15 g Bleitrinitroresorcinat bzw. Diazodinitrophenol, 3 g Tetrazen, 50 g Zinkperoxid und 5 g Titanpulver mit einer Korngröße 40 µm sowie 27 g eines zweibasigen Kugelpulvers wurden unter Zugabe von 30 g Wasser vermischt und die feuchte Masse in eine Lochplatte gestrichen. Nach dem Ausstoßen in Metallnäpfchen vom Kaliber 4,45 mm wurde wie üblich getrocknet, verdichtet und abgedeckt. Die Anzündung des Treibladungspulvers in Patronen, die mit diesen Anzündhütchen laboriert wurden, entsprach den Forderungen. Mit einem Anzündsatz ähnlicher Zusammensetzung, der 10 Gew.-% Diazodinitrophenol und 32 Gew.-% Kugelpulver sowie anstelle des Gemischs aus Zinkperoxid, Tetrazen und Titanpulver ein Sinoxid®-Satz mit Bleitrinitroresorcinat als Initialsprengstoff und Bariumnitrat als Oxidationsmittel enthielt, wurden mit der Munition 9 mm Parabellum nachfolgende Daten ermittelt:

| | Beispiel | Vergleich |
|---|---|---|
| Maximaler Druck (bar) | 2336 | 2009 |
| (Standardabweichung) | 104 | 108 |
| Geschoßgeschwindigkeit nach 6 m (m/s) | 403 | 394 |
| (Standardabweichung) | 4,7 | 8,9 |

Mit dem Anzündsatz des Beispiels kann somit die Menge an Treibladungspulver zur Erhaltung gleicher Daten reduziert werden.

4

**0 031 045**

Beispiel 3 bis 15

Verwendung von Zinkperoxid in pyrotechnischen Gemischen

Die folgenden Beispiele 3 bis 15 enthalten Zinkperoxid in pyrotechnischen Gemischen und beschreiben ihr Reaktionsverhalten bei der Umsetzung nach der Anzündung mit einer Flamme. Die einzelnen Gemische wurden in an sich bekannter Weise durch Vermischen der jeweiligen Substanzen erhalten.

Die Ergebnisse sind in der folgenden Tabelle 2 zusammengefaßt:

5

Tabelle II

| | Beispiel-Nr. | | | | | | | | | | | | | Reaktion |
|---|---|---|---|---|---|---|---|---|---|---|---|---|---|---|
| | 3 | 4 | 5 | 6 | 7 | 8 | 9 | 10 | 11 | 12 | 13 | 14 | 15 | |
| Zinkperoxid | 50 | 50 | 50 | 50 | 50 | 50 | 50 | 50 | 85 | 85 | 85 | 85 | 85 | |
| Calziumsilizid | 50 | | | | | | | | | | | | | langsam |
| Eisenpulver $<100\ \mu m$ | | 50 | | | | | | | | | | | | Rotglut |
| Tantalpulver | | | 50 | | | | | | | | | | | langsam |
| Magnesiumpulver | | | | 50 | | | | | | | | | | heftig |
| Titanpulver $<40\ \mu m$ | | | | | 50 | | | | | | | | 5 | sehr heftig |
| Zirkonpulver | | | | | | 50 | | | | | | | | sehr heftig |
| Cersilizium | | | | | | | 50 | | | | | | | sehr langsam |
| Cermagnesium | | | | | | | | 50 | | | | | | Verpuffung |
| Delrin | | | | | | | | | 15 | | | | 10 | lebhaft |
| Lactose | | | | | | | | | | 15 | | | | lebhaft |
| Polyvinylbutyral | | | | | | | | | | | 15 | | | lebhaft |
| Polyäthylen | | | | | | | | | | | | 15 | | lebhaft |

Die ternäre Mischung in Beispiel 15 reagiert unter mittelschnellem Abbrand der Komponenten.

Die Beurteilung der Reaktion erfolgte nach leicht durchführbarer Anzündung in loser Schüttung. Von den gleichen Mischungen wurden auch Preßlinge hergestellt. Diese ließen sich ebenso leicht anzünden, jedoch ist die Reaktion eines Preßlings etwas heftiger als diejenige des lose geschütteten Pulvers.

**Patentansprüche**

1. Verwendung von Zinkperoxid als alleiniges oder anteiliges Oxidationsmittel in sprengstoffhaltigen oder pyrotechnischen Gemischen.

2. Verwendung von Zinkperoxid gemäß Anspruch 1, dadurch gekennzeichnet, daß das Zinkperoxid einen verfügbaren Sauerstoffanteil von mehr als 12,3% besitzt.

3. Verwendung von Zinkperoxid gemäß Ansprüchen 1 oder 2 als Bestandteil eines Zünd- oder Anzündsatzes.

4. Verwendung von Zinkperoxid gemäß Ansprüchen 1 oder 2 im Gemisch mit Sekundärsprengstoffen.

5. Verwendung von Zinkperoxid gemäß Ansprüchen 1 oder 2 in pyrotechnischen Gemischen, die Metalle oder deren Verbindungen, Reduktionsmittel und weitere Oxidationsmittel enthalten.

6. Verwendung von Zinkperoxid gemäß einem der Ansprüche 1 oder 2 oder 5 in solchen pyrotechnischen Gemischen, die als Metalle Magnesium, Nickel, Titan oder Zirkon enthalten.

7. Verwendung von Zinkperoxid gemäß einem der Ansprüche 1 bis 2 oder 5 bis 6 in solchen pyrotechnischen Gemischen, die als Reduktionsmittel organische polymere Verbindungen enthalten.

**Claims**

1. Use of zinc peroxide as sole or partial oxidant in explosive-containing or pyrotechnic mixtures.

2. Use of zinc peroxide according to claim 1, characterised in that the zinc peroxide possesses an available oxygen content of more than 12.3%.

3. Use of zinc peroxide according to claims 1 or 2 as component of a primer or ignition charge.

4. Use of zinc peroxide according to claims 1 or 2 in admixture with secondary explosives.

5. Use of zinc peroxide according to claims 1 or 2 in pyrotechnic mixtures which contain metals or compounds thereof, reducing agents and further oxidants.

6. Use of zinc peroxide according to one of claims 1 or 2 or 5 in those pyrotechnic mixtures which contain magnesium, nickel, titanium of zirconium as metals.

7. Use of zinc peroxide according to one of claims 1 to 2 or 5 to 6 in those pyrotechnic mixtures which contain organic polymeric compounds as reducing agents.

**Revendications**

1. Utilisation du peroxyde de zinc comme agent d'oxydation partiel ou unique dans des mélanges pyrotechniques ou renfermant des explosifs.

2. Utilisation du peroxyde de zinc selon la revendication 1, caractérisé en ce que le peroxyde de zinc comprend une partie d'oxygène disponible, supérieure à 12,3%.

3. Utilisation du peroxyde de zinc selon la revendication 1 ou 2, comme constituant d'une composition d'amorçage ou d'une composition d'allumage.

4. Utilisation du peroxyde de zinc selon la revendication 1 ou 2, en mélange avec des explosifs secondaires.

5. Utilisation du peroxyde de zinc selon la revendication 1 ou 2 en mélanges pyrotechniques, qui renferment des métaux ou leurs composés, des agents de réduction ou d'autres agents d'oxydation.

6. Utilisation du peroxyde de zinc selon l'une des revendications 1 ou 2 ou 5 dans des mélanges pyrotechniques tels qu'ils renferment comme métaux du magnésium, du nickel, du titane ou du zirconium.

7. Utilisation du peroxyde de zinc selon l'une des revendications 1 à 2 ou 5 à 6, dans des mélanges pyrotechniques tels qu'ils renferment comme agents de réduction des composés organiques polymères.